(19) Europäisches Patentamt
European Patent Office
Office européen des brevets

(11) EP 2 239 307 B2

(12) # NEW EUROPEAN PATENT SPECIFICATION
After opposition procedure

(45) Date of publication and mention of the opposition decision:
**08.10.2025 Bulletin 2025/41**

(45) Mention of the grant of the patent:
**17.05.2017 Bulletin 2017/20**

(21) Application number: **10159208.7**

(22) Date of filing: **07.04.2010**

(51) International Patent Classification (IPC):
***C09C 1/64*** (2006.01) ***C09D 11/00*** (2014.01)
***C09D 11/322*** (2014.01) ***C09D 11/326*** (2014.01)
***C09D 17/00*** (2006.01) ***B82Y 30/00*** (2011.01)

(52) Cooperative Patent Classification (CPC):
**C09C 1/644; B82Y 30/00; C09C 1/648; C09D 11/322; C09D 11/326; C09D 17/006;**
C01P 2002/85; C01P 2004/20; C01P 2004/62; C01P 2004/64; C01P 2006/22

(54) **Water-resistant aluminum pigment, water-resistant aluminum pigment dispersion, aqueous ink composition containing the aforementioned, and method for producing water-resistant aluminum pigment dispersion**

Wasserbeständiges Aluminiumpigment, wasserbeständige Aluminiumpigmentdispersion, wässrige Tintenzusammensetzung damit und Verfahren zur Herstellung einer wasserbeständigen Aluminiumpigmentdispersion

Pigment d'aluminium résistant à l'eau, dispersion de pigment d'aluminium résistant à l'eau, composition d'encre aqueuse les contenant et procédé de fabrication de la dispersion de pigment d'aluminium résistant à l'eau

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority:
**07.04.2009 JP 2009092605**
**08.12.2009 JP 2009278371**
**27.11.2009 JP 2009270057**
**26.01.2010 JP 2010014231**

(43) Date of publication of application:
**13.10.2010 Bulletin 2010/41**

(73) Proprietor: **Seiko Epson Corporation**
**Tokyo 163-0811 (JP)**

(72) Inventors:
- **Kagata, Takayoshi**
  **Nagano-ken 392-8502 (JP)**
- **Sano, Tsuyoshi**
  **Nagano-ken 392-8502 (JP)**
- **Nakamoto, Junko**
  **Kyoto 600-8813 (JP)**
- **Suzuki, Kazuko**
  **Kyoto 600-8813 (JP)**
- **Masuda, Shiori**
  **Kyoto 600-8813 (JP)**
- **Fukui, Toshimi**
  **Kyoto 600-8813 (JP)**
- **Kato, Hiroshi**
  **Nagano-ken 392-8502 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 619 222**
**EP-A2- 1 942 158**
**WO-A2-01/81483**
**WO-A2-2005/063897**
**DE-A1- 102005 037 611**
**DE-A1- 102005 037 611**
**DE-A1- 19 820 112**
**JP-A- 2001 011 357**
**JP-A- 2003 253 182**
**JP-A- 2008 201 991**
**US-A- 5 707 433**
**US-A- 5 707 433**
**US-A1- 2005 166 795**



Processed by Luminess, 75001 PARIS (FR)

## Description

BACKGROUND

1. Technical Field

The present invention relates to a water-resistant aluminum pigment, a water-resistant aluminum pigment dispersion, an aqueous ink composition containing the water-resistant aluminum pigment and the water-resistant aluminum pigment dispersion, and a method for producing a water-resistant aluminum pigment dispersion.

2. Related Art

Hitherto, foil stamping using metal foil and printing inks containing a golden powder and a silvery powder, which are produced from fine particles of brass and aluminum, serving as pigments, thermal transfer printing using metal foil, and so forth have been employed as methods for forming coating films with metallic luster on printing media.

In recent years, ink-jet printing has been applied to various printing fields. An example of the applications is metallic printing. The development of ink with a metallic luster is proceeding. For example, JP-A-2008-174712 discloses an aluminum pigment dispersion containing an organic solvent such as alkylene glycol and a nonaqueous ink composition containing the same.

Meanwhile, the development of an aqueous ink composition is required rather than the nonaqueous ink composition containing an organic solvent in view of the global environment and the safety to the human body.

In the case where the aluminum pigment is dispersed in water, the aluminum pigment disadvantageously reacts with water to generate hydrogen gas and whitened to impair the metallic luster due to the formation of alumina. Thus, an ink composition containing the aluminum pigment is forced to be based on an organic solvent that contains almost no water.

DE 10 2005 037 611 A1 relates to platelet-shaped metallic effect pigments with a hybrid inorganic/organic layer, and to a method of producing them. The metallic effect pigments with coating comprise a platelet-shaped substrate, wherein the coating comprises at least one hybrid inorganic/organic layer, the hybrid layer having at least partly an inorganic network that has one or more inorganic oxide components, and having at least one organic component, the organic component being at least partly an organic oligomer and/or polymer which is covalently bonded at least partly to the inorganic network via one or more organic network formers.

WO 2005/063897 A2 relates to the provision of coated metallic pigments, to a coating composition, to a process for the production of said coated metallic pigments, and to the use thereof. In particular, the pigments with a coating are characterized in that the coating envelops the metallic pigments and comprises at least one of an oligomeric and a polymeric binding agent, which binding agent is at least one of chemically cross-linkable and cross-linkable under the action of means selected from the group consisting of heat, infrared radiation, ultraviolet radiation and electron radiation, which coated metallic pigments are present in the form of a powder which has a particle size d50 of less than 190 μm and are resistant to corrosion following curing in a powder-based varnish.

SUMMARY

An advantage of some aspects of the invention is that it provides a water-resistant aluminum pigment which prevents whitening and which has excellent water dispersibility and a metallic luster when the pigment is incorporated into aqueous paint or an aqueous ink composition, and a water-resistant aluminum pigment dispersion.

An advantage of some aspects of the invention is that it provides the following aspects and embodiments.

According to a first aspect of the invention, a method for producing a water-resistant aluminum pigment dispersion includes (a) adding a treatment agent containing a compound of general formula (1) described below to an aluminum pigment dispersion containing aluminum pigment particles dispersed in an organic solvent and reacting a hydroxy group present on a surface of each of the aluminum pigment particles with the compound of general formula (1) described below to form a film on the surface of each aluminum pigment particle, (b) removing at least a portion of the organic solvent, and (c) adding an aqueous solution containing at least one selected from polyoxyethylene alkyl ether phosphate and salts thereof,

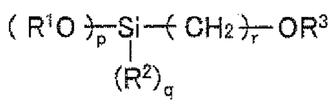 ··· (1)

(wherein p represents an integer of 1 to 3, q represents an integer that satisfies the equation p + q = 3, r represents an integer of 2 to 10, $R^1$ and $R^2$ each independently represent an alkyl group having 1 to 4 carbon atoms, and $R^3$ represents an

acrylic group, an acryloyl group, or a methacryloyl group).

In the method according to the first aspect of the invention, the treatment agent may further contain alkoxyalkylsilane and water.

In the method according to the first aspect of the invention, the aluminum pigment particles may be plate-like particles having an average thickness of 5 nm to 30 nm and a 50%-average particle diameter of 0.5 $\mu$m to 3 $\mu$m.

In the method according to the first aspect of the invention, the film may have a thickness of 0.5 nm to 10 nm.

In the method according to the first aspect of the invention, the organic solvent may be diethylene glycol diethyl ether or triethylene glycol monobutyl ether.

A water-resistant aluminum pigment dispersion according to a second aspect of the invention includes water-resistant aluminum pigment particles as defined in appended claim 1, each coated with a film containing at least silicon, the particles being prepared by subjecting an aluminum pigment to surface treatment with a treatment agent containing a compound of general formula (1) described below, and an aqueous solution containing at least one selected from polyoxyethylene alkyl ether phosphate and salts thereof, the particles being dispersed in the aqueous solution,

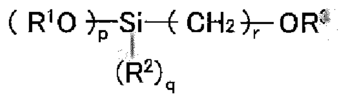 ··· (1)

(wherein p represents an integer of 1 to 3, q represents an integer that satisfies the equation p + q = 3, r represents an integer of 2 to 10, $R^1$ and $R^2$ each independently represent an alkyl group having 1 to 4 carbon atoms, and $R^3$ represents an acrylic group, an acryloyl group, or a methacryloyl group).

In the water-resistant aluminum pigment dispersion according to the second aspect of the invention, the treatment agent may further contain alkoxyalkylsilane and water.

In the water-resistant aluminum pigment dispersion according to the second aspect of the invention, the proportion of the at least one selected from the polyoxyethylene alkyl ether phosphate and salts thereof may be 0.3 to 7.0 times the proportion of the aluminum pigment.

In the water-resistant aluminum pigment dispersion according to the second aspect of the invention, the aluminum pigment particles may be plate-like particles having an average thickness of 5 nm to 30 nm and a 50%-average particle diameter of 0.5 $\mu$m to 3 $\mu$m.

In the water-resistant aluminum pigment dispersion according to the second aspect of the invention, the film containing silicon may have a thickness of 0.5 nm to 10 nm.

A water-resistant aluminum pigment according to a third aspect of the invention comprising at least a compound of general formula (1) described below which is chemically bonded to particle surfaces of the aluminum pigment, and at least one selected from polyoxyethylene alkyl ether phosphate and salts thereof,

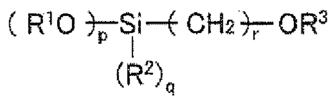 ··· (1)

(wherein p represents an integer of 1 to 3, q represents an integer that satisfies the equation p + q = 3, r represents an integer of 2 to 10, $R^1$ and $R^2$ each independently represent an alkyl group having 1 to 4 carbon atoms, and $R^3$ represents an acrylic group, an acryloyl group, or a methacryloyl group).

In the water-resistant aluminum pigment according to the third aspect of the invention, alkoxyalkylsilane may also be chemically bonded to the particle surfaces of the aluminum pigment in the structure.

In the water-resistant aluminum pigment according to the third aspect of the invention, the aluminum pigment particles may be plate-like particles having an average thickness of 5 nm to 30 nm and a 50%-average particle diameter of 0.5 $\mu$m to 3 $\mu$m.

In the water-resistant aluminum pigment according to the third aspect of the invention, in an elementary analysis by X-ray photoelectron spectroscopy (XPS), the detection rate of silicon may remain substantially constant or may be increased as a photoelectron take-off angle is increased.

In this case, the detection rate of silicon may be in the range of 0.01% to 1%.

An aqueous ink composition according to a fourth aspect of the invention includes the water-resistant aluminum pigment dispersion according to the second aspect of the invention or the water-resistant aluminum pigment according to the third aspect of the invention.

BRIER DESCRIPTION OF THE DRAWINGS

The invention will be described with reference to the accompanying drawings, wherein like numbers reference

like elements.
Figs. 1A and 1B are conceptual drawings schematically showing a photoelectron take-off angle in X-ray photoelectron spectroscopy (XPS) measurement.

DESCRIPTION OF EXEMPLARY EMBODIMENTS

Preferred embodiments of the invention will be described below. The following embodiments are merely examples of the invention. The invention is not limited to the following embodiments. Various modifications may be made so long as the subject matter of the invention is not changed. Hereinafter, in this specification, the term "chemically bonded" is used to indicate that a hydroxy group present on a surface of an aluminum pigment particle is bonded to an alkoxy group of a compound of general formula (1) and/or alkoxyalkylsilane by a hydrolysis reaction.

1. Method for Producing Water-Resistant Aluminum Pigment Dispersion

A method for producing a water-resistant aluminum pigment dispersion according to an embodiment of the invention includes (a) adding a treatment agent containing a compound of general formula (1) described below to an aluminum pigment dispersion containing aluminum pigment particles dispersed in an organic solvent and reacting a hydroxy group present on a surface of each of the aluminum pigment particles with the compound of general formula (1) to form a film on the surface of each aluminum pigment particle, (b) removing at least a portion of the organic solvent, and (c) adding an aqueous solution containing at least one selected from polyoxyethylene alkyl ether phosphate and salts thereof,

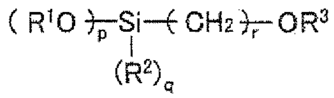 ··· (1)

(wherein p represents an integer of 1 to 3, q represents an integer that satisfies the equation p + q = 3, r represents an integer of 2 to 10, $R^1$ and $R^2$ each independently represent an alkyl group having 1 to 4 carbon atoms, and $R^3$ represents an acrylic group, an acryloyl group, or a methacryloyl group).

An example of a method for producing a water-resistant aluminum pigment dispersion according to this embodiment will be described below.

1.1. Step (a)

An aluminum pigment dispersion in which an aluminum pigment is dispersed in an organic solvent is prepared by substeps (1) and (2) described below.

(1) A composite pigment source is prepared in which a release resin layer and a layer composed of aluminum or an aluminum alloy (hereinafter, simply referred to as an "aluminum layer") are stacked, in that order, on a surface of a base sheet.

Examples of the base sheet include, but are not particularly limited to, release films, such as polyester films, e.g., polytetrafluoroethylene, polyethylene, polypropylene, and polyethylene terephthalate films, polyamide film, e.g., nylon 6.6 and nylon 6, polycarbonate films, triacetate films, and polyimide films. Among these, polyethylene terephthalate and copolymers thereof are preferred.

The thickness of the base sheet is not particularly limited but is preferably 10 to 150 μm. A thickness of 10 μm or more results in the good handleability of the base sheet in the process and so forth. A thickness of 150 μm or less results in a flexible base that is successfully rolled and released.

The release resin layer serves as an undercoat layer on which the aluminum layer is arranged and serves as a releasable layer to improve the releasability of the aluminum layer from the surface of the base sheet. Examples of a resin used for the release resin layer include polyvinyl alcohol, polyvinyl butyral, polyethylene glycol, polyacrylic acid, polyacrylamide, cellulose derivatives, polyacrylic acid, and modified nylon resins.

A solution of one of the resins exemplified above or a solution of a mixture of two or more of the resins exemplified above may be applied to the base sheet and dried to form the release resin layer. The solution may further contain an additive such as a viscosity modifier.

The solution used for the formation of the release resin layer may be applied by a commonly known technique, e.g., gravure coating, roll coating, blade coating, extrusion coating, dip coating, or spin coating. After the application and drying, surface smoothing can be performed by calendering, if needed.

The thickness of the release resin layer is not particularly limited but is preferably in the range of 0.5 to 50 μm and

more preferably 1 to 10 μm. A thickness of less than 0.5 μm leads to lack of the amount of the resin as a dispersion resin. A thickness exceeding 50 μm is liable to cause delamination at the interface between the release resin layer and the aluminum layer when the composite pigment source is rolled.

Preferred examples of a method for stacking the aluminum layer on the release resin layer include vacuum evaporation, ion plating, and sputtering.

The aluminum layer may be sandwiched between protective layers as exemplified in JP-A-2005-68250. Examples of the protective layers include silicon oxide layers and protective resin layers.

The silicon oxide layers are not particularly limited so long as they contain silicon oxide. The silicon oxide layers are preferably formed by a sol-gel method with a silicon alkoxide, such as a tetraalkoxysilane, or a polymer thereof. That is, an alcohol solution of a silicon alkoxide or a polymer thereof is applied and fired to form the silicon oxide layers.

Any resin may be used for the protective resin layers without limitation so long as the resin is not dissolved in a dispersion medium. Examples of the resin include polyvinyl alcohol, polyethylene glycol, polyacrylic acid, polyacrylamide, and cellulose derivatives. Among these, polyvinyl alcohol and cellulose derivatives are preferably used to form the layer.

An aqueous solution of one of the resins exemplified above or an aqueous solution of a mixture of two or more of the resins exemplified above may be applied and dried to form the protective resin layers. The solution may further contain an additive such as a viscosity modifier. The alcohol solution used for the formation of the silicon oxide layers and the aqueous solution used for the formation of the protective resin layers may be applied in the same way as the application of the solution containing the resin constituting the release resin layer.

The thickness of each of the protective layers is not particularly limited but is preferably in the range of 50 to 150 nm. A thickness of less than 50 nm leads to lack of mechanical strength. A thickness exceeding 150 nm results in an excessively high strength, making pulverization and dispersion difficult. Furthermore, a thickness exceeding 150 nm can cause the detachment of the protective layers from the aluminum layer.

A coloring material layer may be arranged between the aluminum layer and a corresponding one of the protective layers as exemplified in JP-A-2005-68251. The coloring material layer is arranged to produce a composite pigment that gives any color. The coloring material layer is not particularly limited so long as it contains a coloring material that imparts any tint and hue to the aluminum pigment, having a metallic luster, brightness, and hiding power, used in this embodiment. The coloring material used in this coloring material layer may be either a dye or a pigment. Any known dye or pigment may be appropriately used.

In this case, the term "pigment" used in the coloring material layer means a natural pigment, a synthetic organic pigment, a synthetic inorganic pigment, or the like defined in the field of general engineering.

A method for forming the coloring material layer is not particularly limited. The coloring material layer is preferably formed by coating. In the case where the coloring material used in the coloring material layer is the pigment, preferably, the coloring material layer further contains a coloring-material dispersion resin. The coloring material layer is preferably formed by dispersing or dissolving, for example, the pigment, the coloring-material dispersion resin, and optionally other additives in a solvent to prepare a solution, forming a uniform liquid film therefrom by spin coating, and drying the liquid film to prepare a thin resin film. In the production of the composite pigment source, the coloring material layer and the protective layers are preferably formed by coating from the viewpoint of achieving good operating efficiency.

The composite pigment source may have a laminated structure in which a plurality of the release resin layers and a plurality of the aluminum layers are alternately stacked. In this case, the total thickness of the laminated structure including the plural aluminum layers, i.e., a stack of the aluminum layer/release resin layer/aluminum layer or a stack of the release resin layer/aluminum layer, excluding the base sheet and the release resin layer arranged directly on the base sheet, preferably has a thickness of 5000 nm or less. A thickness of 5000 nm or less does not readily result in the occurrence of cracking or detachment even when the composite pigment source is rolled, providing excellent preservability. Furthermore, when the composite pigment source is converted into the pigment, the resulting pigment has an excellent metallic luster and is thus preferred. While a structure in which the release resin layer and the aluminum layer are stacked in that order on each surface of the base sheet may also be exemplified, the structure of the composite pigment source is not limited thereto.

(2) Next, the base sheet is detached from the release resin layer of the composite pigment source in an organic solvent. The separated stack of the aluminum layer and the release resin layer is subjected to pulverization or size reduction to prepare an aluminum pigment dispersion containing coarse particles. Removal of the coarse particles from the resulting aluminum pigment dispersion by filtration yields an aluminum pigment dispersion containing plate-like aluminum particles.

The organic solvent is not limited so long as it does not impair the dispersion stability of the aluminum pigment or reactivity with the compound of general formula (1) described above. A polar organic solvent is preferred. Examples of the polar organic solvent include alcohols, such as methyl alcohol, ethyl alcohol, propyl alcohol, butyl alcohol, isopropyl alcohol, and fluorinated alcohol; ketones, such as acetone, methyl ethyl ketone, and cyclohexanone; carboxylic acid esters, such as methyl acetate, ethyl acetate, propyl acetate, butyl acetate, methyl propionate, and ethyl propionate; and ethers, such as diethyl ether, dipropyl ether, tetrahydrofuran, and dioxane.

Among these polar organic solvents exemplified above, alkylene glycol monoether and alkylene glycol diether,

which are each in the form of a liquid at ambient temperature and atmospheric pressure, are more preferred.

Examples of alkylene glycol monoether include ethylene glycol monomethyl ether, ethylene glycol monoethyl ether, ethylene glycol monoisopropyl ether, ethylene glycol monobutyl ether, ethylene glycol monohexyl ether, ethylene glycol monophenyl ether, diethylene glycol monomethyl ether, diethylene glycol monoethyl ether, diethylene glycol monobutyl ether, triethylene glycol monomethyl ether, triethylene glycol monoethyl ether, triethylene glycol monobutyl ether, tetraethylene glycol monomethyl ether, tetraethylene glycol monoethyl ether, propylene glycol monomethyl ether, propylene glycol monoethyl ether, dipropylene glycol monomethyl ether, and dipropylene glycol monoethyl ether.

Example of alkylene glycol diether include ethylene glycol dimethyl ether, ethylene glycol diethyl ether, ethylene glycol dibutyl ether, diethylene glycol dimethyl ether, diethylene glycol diethyl ether, diethylene glycol dibutyl ether, triethylene glycol dimethyl ether, triethylene glycol diethyl ether, triethylene glycol dibutyl ether, tetraethylene glycol dimethyl ether, tetraethylene glycol diethyl ether, tetraethylene glycol dibutyl ether, propylene glycol dimethyl ether, propylene glycol diethyl ether, dipropylene glycol dimethyl ether, and dipropylene glycol diethyl ether.

Among these, triethylene glycol monobutyl ether and diethylene glycol diethyl ether are more preferred because they achieve excellent dispersion stability of the aluminum pigment. Diethylene glycol diethyl ether is particularly preferred from the viewpoint of achieving the glossiness of the aluminum pigment and imparting water resistance.

Preferred examples of a method for performing detachment from the base sheet include, but are not particularly limited to, a method in which the composite pigment source is immersed in a liquid; and a method in which sonication is performed while the composite pigment source is being immersed in a liquid to detach the composite pigment and pulverize the detached composite pigment.

The resulting aluminum pigment formed of plate-like particles is subjected to dispersion treatment alone in an organic solvent to provide a stable dispersion because the release resin layer serves as a protective colloid. In the case where the aluminum pigment is used in an ink composition, the resin constituting the release resin layer also enhances the adhesion of the aluminum pigment to a recording medium.

The aluminum pigment in the aluminum pigment dispersion prepared by the substeps described above is preferably formed of plate-like particles from the viewpoint of imparting satisfactory water resistance and achieving a satisfactory metallic luster.

Here, the term "plate-like particles" is used to indicate particles each having a substantially flat plane (X-Y plane) and a substantially uniform thickness (Z), wherein X represents the major axis on the plane of each plate-like particle, Y represents the minor axis, and Z represents the thickness. Specifically, the plate-like particles are particles in which the 50%-average particle diameter (hereinafter, also simply referred to as "R50") in terms of circle-equivalent diameters determined from areas of the substantially flat planes (X-Y planes) of the aluminum particles is in the range of 0.5 μm to 3 μm and the thickness (Z) is in the range of 5 nm to 30 nm.

Here, the term "circle-equivalent diameter" is used to indicate the diameter of a circle when the substantially flat plane (X-Y plane) of each of the aluminum particles is assumed to be the circle having the same projected area as the projected area of each aluminum particle. For example, in the case where the substantially flat plane (X-Y plane) of each aluminum particle has a polygonal shape, the diameter of a circle obtained by converting the projected shape of the polygon into the circle is referred to as the circle-equivalent diameter of each aluminum particle.

R50 is preferably in the range of 0.5 μm to 3 μm and more preferably 0.75 μm to 2 μm from the viewpoint of ensuring a satisfactory metallic luster and print stability. An R50 of less than 0.5 μm can lead to an insufficient metallic luster. An R50 exceeding 3 μm can cause a reduction in print stability.

The maximum particle diameter in terms of the circle-equivalent diameters determined from the areas of the X-Y planes of the plate-like particles is preferably 10 μm or less. A maximum particle diameter of 10 μm or less prevents clogging of a nozzle and a filter configured to remove foreign matter, the filter being arranged in an ink-flow passage of an ink-jet recording apparatus.

The major axis X, the minor axis Y, and the circle-equivalent diameter on the plane of each plate-like particle can be measured with a particle-image analyzer. Examples of the particle-image analyzer include flow particle image analyzers FPIA-2100, FPIA-3000, and FPIA-3000S manufactured by Sysmex Corporation.

The particle size distribution (CV value) of the plate-like particles is determined from expression (2).

$$\text{CV value} = (\text{standard deviation of particle size distribution}/\text{average particle diameter}) \times 100 \qquad (2)$$

Here, the resulting CV value is preferably 60 or less, more preferably 50 or less, and particularly preferably 40 or less. The use of the plate-like particles having a CV value of 60 or less results in excellent print stability.

The thickness (Z) is preferably in the range of 5 nm to 30 nm and more preferably 10 nm to 25 nm from the viewpoint of ensuring a metallic luster. A thickness (Z) of less than 5 nm is liable to cause a reduction in the degree of metallic luster when films are formed on surfaces of the aluminum particles. A thickness (Z) exceeding 30 nm is also liable to cause a reduction in the degree of metallic luster.

The aluminum pigment is preferably composed of aluminum or an aluminum alloy from the viewpoint of achieving low cost and the metallic luster. In the case of using the aluminum alloy, examples of additional metal elements and non-metallic elements that can be added as additives other than aluminum include silver, gold, platinum, nickel, chromium, tin, zinc, indium, titanium, and copper.

(3) Next, a treatment agent containing a compound of general formula (1) described above is added to the aluminum pigment dispersion. The resulting mixture is stirred to subject a hydroxy group present on the surface of each of the aluminum pigment particles and an alkoxy group of the compound of general formula (1) to a hydrolysis reaction, forming a film on the surface of each aluminum pigment particle.

The compound of general formula (1) has an acrylic group, an acryloyl group, or a methacryloyl group as a terminal group ($R^3$-), thus increasing the hydrophobic properties of the aluminum pigment. This results in a water-resistant aluminum pigment. Furthermore, the film contains silicon; hence, the metallic luster of the aluminum pigment is not impaired.

Examples of the compound of general formula (1) include 3-methacryloxypropylmethyldimethoxysilane, 3-methacryloxypropyltrimethoxysilane, 3-methacryloxypropylmethyldimethoxysilane, 3-methacryloxypropyltriethoxysilane, and 3-acryloxypropyltrimethoxysilane.

The amount of the compound of general formula (1) added may be determined by the calculation of an amount such that the thickness of the film is in the range of 0.5 nm to 10 nm and preferably 5 nm (hereinafter, this amount is referred to as "one equivalent"). A thickness of the film exceeding 10 nm can cause a reduction in the degree of metallic luster. Specifically, the compound of general formula (1) is preferably added in an amount of 1.0 to 3.0 equivalents and more preferably 1.0 to 2.0 equivalents. The addition of a slightly excess amount of the compound of general formula (1) within the above range assuredly yields the aluminum pigment having the film with a target thickness. An amount of the compound of general formula (1) exceeding 3.0 equivalents can cause a white turbidity due to the unreacted compound of general formula (1). An amount of the compound of general formula (1) of less than 1.0 equivalent can fail to completely cover the hydroxy groups present on the surfaces of the aluminum pigment particles.

The treatment agent preferably contains alkoxyalkylsilane and water in addition to the compound of general formula (1). Water is added to convert terminal groups of the compound of general formula (1) and the alkoxyalkylsilane into silanol groups. The use of this treatment agent enhances the reactivity with the aluminum pigment.

The reason the treatment agent is preferred is as follows: In the case where the treatment agent only containing the compound of general formula (1) is used, the bulky molecular structure of the compound of general formula (1) can inhibit the hydrolysis reaction due to the steric hindrance of the compound, thus causing unreacted hydroxy groups to remain on the surfaces of the aluminum pigment. The presence of the unreacted hydroxy groups promotes the whitening of the aluminum pigment. Thus, alkoxyalkylsilane with a less bulky molecular structure and the unreacted hydroxy groups of the aluminum pigment are subjected to a hydrolysis reaction, thereby reducing the number of the unreacted hydroxy groups.

Examples of a preferred compound serving as the alkoxyalkylsilane include trimethoxymethylsilane, triethoxymethylsilane, tripropoxymethylsilane, trimethoxyethylsilane, triethoxyethylsilane, trimethoxyphenylsilane, triethoxyphenylsilane, dimethoxydimethylsilane, diethoxydimethylsilane, dimethoxydiethylsilane, diethoxydiethylsilane, dimethoxydiphenylsilane, and diethoxydiphenylsilane, from the viewpoint described above. Among these compounds, trimethoxymethylsilane is particularly preferred.

The amount of the alkoxyalkylsilane added is preferably in the range of 0.1 to 2.0 equivalents and more preferably 0.5 to 1.5 equivalents. An amount of the alkoxyalkylsilane exceeding 2.0 equivalents can cause a white turbidity due to unreacted alkoxyalkylsilane. An amount of the alkoxyalkylsilane of less than 0.1 equivalents can fail to completely cover the hydroxy groups present on the surfaces of the aluminum pigment particles.

For example, the treatment agent can be prepared by adding water to a mixture of the compound of general formula (1) and the alkoxyalkylsilane and then stirring the resulting mixture at 40°C for about 1 to about 2 hours. The amount of water added is not particularly limited but is preferably 0.5% to 50% by mass and more preferably 0.8% to 40% by mass with respect to the total mass of the treatment agent. The terminal groups of the compound of general formula (1) and the alkoxyalkylsilane are sufficiently converted into silanol groups by the addition of water within the above range.

The reaction temperature of the aluminum pigment and the treatment agent during the hydrolysis reaction is preferably in the range of 10°C to 60°C, more preferably 15°C to 40°C, and particularly preferably 20°C to 30°C. A temperature of lower than 10°C causes the progression of the hydrolysis reaction to slow down. This is liable to lead to an insufficient formation of the films on the surfaces of the aluminum pigment particles. A temperature exceeding 60°C can cause the solidification of the aluminum pigment dispersion.

The reaction time of the aluminum pigment and the treatment agent during the hydrolysis reaction is preferably in the range of 0.5 to 100 hours and more preferably 1 to 72 hours. A reaction time of less than 0.5 hours can fail to sufficiently complete the hydrolysis reaction, which can fail to sufficiently provide water resistance and a metallic luster. A reaction time exceeding 100 hours can cause aggregation of the aluminum pigment.

The pH in a reaction system is not particularly limited but may be acidic, neutral, or alkaline.

1.2. Step (b)

Next, at least a portion of the organic solvent in the aluminum pigment dispersion prepared in the step (a) is removed. Examples of a method for separating the organic solvent in the aluminum pigment dispersion include filtration, centrifugal sedimentation, and centrifugal separation. The organic solvent in the aluminum pigment dispersion is separated and removed by the method from the aluminum pigment particles including the films. Among these methods described above, a method for separating and removing the organic solvent by centrifugal separation is preferred because of its simple operation. In this step, it is preferable to remove 70% or more of the organic solvent in the aluminum pigment dispersion. It is more preferable to remove 80% or more of the organic solvent.

Here, a step of rinsing the aluminum pigment particles having the films may be provided. A solvent for use in rinsing is preferably selected from the organic solvents described above. It is more preferable to use the same organic solvent as the organic solvent that has been contained in the aluminum pigment dispersion. The rinsing step is additionally provided, which makes it possible to remove the compound of general formula (1) and the alkoxyalkylsilane that are not involved in the hydrolysis reaction and are contained in the aluminum pigment dispersion. The film arranged on the surface of each of the aluminum pigment particles is assumed to include a portion chemically bonded to the surface of each aluminum pigment particle and a portion physically adsorbed on the chemically bonded portion. The physically adsorbed portion is removed in the rinsing step, thereby improving the water dispersibility of the aluminum pigment and providing a satisfactory metallic luster.

1.3. Step (c)

Next, an aqueous solution containing at least one selected from (polyoxyethylene alkyl ether phosphate and salts thereof (hereinafter, also referred to as an "aqueous surfactant solution") is added to the aluminum pigment dispersion from which at least a portion of the organic solvent has been removed in the step (b). The resulting mixture is sufficiently stirred. The stirring time is not particularly limited but is preferably in the range of about 3 hours to about 120 hours. A stirring time within the above range affords an aluminum pigment dispersion having excellent water dispersibility without impairing the metallic luster. A stirring time exceeding about 120 hours can lead to a reduction in metallic luster due to the aggregation of particles.

In this step, the organic solvent in the aluminum pigment dispersion prepared in the step (b) described above is replaced with an aqueous solvent, thus providing the aluminum pigment dispersion with excellent water dispersibility. Furthermore, the solvent of the aluminum pigment dispersion prepared in this step is based on an aqueous solvent; hence, the aluminum pigment dispersion can be readily used for an aqueous ink composition.

The (polyoxyethylene alkyl ether phosphate is a compound of general formula (3) or (4) described below.

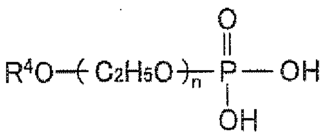 ··· (3)

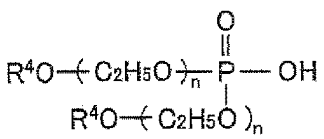 ··· (4)

(wherein $R^4$'s each represent an alkyl group, an alkylene group, or a phenyl group; and n's each represent an integer of 2 to 10).

Each of $R^4$'s in general formulae (3) and (4) described above preferably represents an alkyl group ($C_mH_{2m+1}$-), wherein, more preferably, m represents 8 to 18 and particularly preferably 12 (polyoxyethylene lauryl ether phosphate). Examples of commercially available polyoxyethylene alkyl ether phosphate include NIKKOL DDP-2, DDP-4, DDP-6, DDP-10, TLP-4, TCP-5, TDP-2, TDP-6, TDP-8, and TDP-10 (manufactured by Nikko Chemicals Co., Ltd.); PRISURF AL, A210D, A-208B, and A219B (manufactured by Dai-Ichi Kogyo Seiyaku Co., Ltd.); ADEKA COL CS-1361E (manufactured by Adeka Corporation); and PHOSPHANOL RD-720 (manufactured by Toho Chemical Industry Co., Ltd).

Examples of the salts of the polyoxyethylene alkyl ether phosphate include sodium salts, potassium salts, and monoethanolamine salts of the polyoxyethylene alkyl ether phosphate of general formula (3) or (4). Among these compounds, a monoethanolamine salt of general formula (5) or (6) described below is preferred:

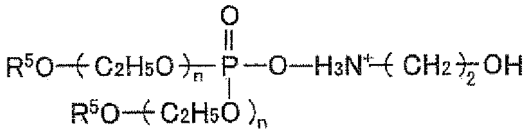 ··· (5)

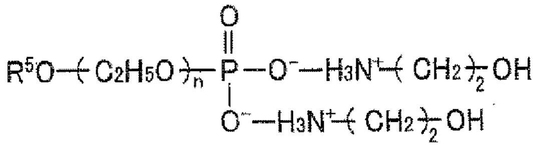 ··· (6)

(wherein $R^5$'s each represent an alkyl group, an alkylene group, or a phenyl group; n's each represent an integer of 2 to 10).

Each of $R^5$'s in general formulae (5) and (6) described above preferably represents an alkyl group ($C_mH_{2m+1}$-), wherein, more preferably, m represents 8 to 18 and particularly preferably 12 (polyoxyethylene lauryl ether phosphate). Examples of commercially available polyoxyethylene alkyl ether phosphate include NIKKOL DLP-10 and DOP-8NV (manufactured by Nikko Chemicals Co., Ltd.); PRISURF M-208F and M-208B (manufactured by Dai-Ichi Kogyo Seiyaku Co., Ltd.); ADEKA COL CS-1361E (manufactured by Adeka Corporation); and PHOSPHANOL RD-720 (manufactured by Toho Chemical Industry Co., Ltd).

The polyoxyethylene alkyl ether phosphate or the salt thereof preferably has a hydrophile-lipophile balance (HLB) value of 5 to 18 and more preferably 6 to 16. At an HLB value exceeding 18, the hydrophile-lipophile balance value is a hydrophilic side. Thus, the polyoxyethylene alkyl ether phosphate or the salt thereof is not readily adsorbed on the surfaces of the water-resistant aluminum pigment particles, failing to provide satisfactory water dispersibility, in some cases. This can cause the erosion of the surfaces of the aluminum pigment particles by water to generate hydrogen gas. At an HLB value of less than 5, the hydrophile-lipophile balance value is a lipophilic side. In this case, the polyoxyethylene alkyl ether phosphate or the salt thereof is not readily dissolved in water, which is unsuitable for use.

The proportion of the polyoxyethylene alkyl ether phosphate or the salt thereof is adjusted in such a manner that the concentration of the polyoxyethylene alkyl ether phosphate or the salt thereof is preferably in the range of 0.3 to 7.0 times and more preferably 0.6 to 5.0 times that of the aluminum pigment. A proportion within the above range yields a water-resistant aluminum pigment dispersion having excellent water dispersibility without impairing the metallic luster.

## 2. Water-Resistant Aluminum Pigment and Dispersion Containing Same

### 2.1. Water-Resistant Aluminum Pigment Dispersion

A water-resistant aluminum pigment dispersion according to an embodiment of the invention can be produced by the production method described above. That is, the water-resistant aluminum pigment dispersion according to this embodiment includes water-resistant aluminum pigment particles as defined in appended claim 1, each coated with a film containing at least silicon, the particles being prepared by subjecting an aluminum pigment to surface treatment with a treatment agent containing a compound of general formula (1) described above, and an aqueous solution containing at least one selected from polyoxyethylene alkyl ether phosphate and salts thereof, in which the particles are dispersed in the aqueous solution.

In the water-resistant aluminum pigment dispersion according to this embodiment, the arrangement of the film containing at least silicon on the surface of each of the aluminum pigment particles imparts water resistance to the aluminum pigment. In this case, the metallic luster of the aluminum pigment is not impaired even when the aluminum pigment is incorporated in a water-base paint and an aqueous ink composition. Furthermore, the water-resistant aluminum pigment particles each coated with the film containing at least silicon are dispersed in the aqueous solution containing at least one selected from polyoxyethylene alkyl ether phosphate and salts thereof, thereby providing the water-resistant aluminum pigment dispersion having excellent water dispersibility without impairing the water resistance or metallic luster.

As described above, the aluminum pigment is preferably formed of the plate-like particles with an average thickness of 5 nm to 30 nm and a 50%-average particle diameter (R50) of 0.5 μm to 3 μm. An average thickness of the aluminum pigment of 5 nm to 30 nm results in the water-resistant aluminum pigment with an excellent metallic luster. An average thickness of less than 5 nm is liable to cause a reduction in the degree of metallic luster. An average thickness exceeding 30 nm is also liable to cause a reduction in the degree of metallic luster. An R50 of 0.5 μm to 3 μm ensures a satisfactory metallic luster and print stability. An R50 of less than 0.5 μm can lead to an insufficient metallic luster. An R50 exceeding 3 μm can cause a reduction in print stability.

The film containing at least silicon preferably has a thickness of 0.5 nm to 10 nm and more preferably 1 nm to 9 nm. A thickness of the film containing at least silicon of less than 0.5 nm fails to impart sufficient water resistance and water

dispersibility to the aluminum pigment. A thickness of the film containing at least silicon exceeding 10 nm imparts sufficient water resistance and water dispersibility to the aluminum pigment but is liable to cause a reduction in the degree of metallic luster.

2.2. Water-resistant Aluminum Pigment

A water-resistant aluminum pigment contained in a water-resistant aluminum pigment dispersion according to an embodiment of the invention, the dispersion being produced by the production method described above, comprises at least a compound of general formula (1) described above which is chemically bonded to particle surfaces of the aluminum pigment, and at least one selected from polyoxyethylene alkyl ether phosphate and salts thereof. Furthermore, according to the production method described above, it is possible to produce a water-resistant aluminum pigment in which alkoxysilane is also chemically bonded to the particle surfaces of the aluminum pigment, in addition to the compound of general formula (1).

The water-resistant aluminum pigment particles according to this embodiment can be analyzed by XPS. That is, elements present in the vicinity of the surfaces of the particles can be analyzed qualitatively and quantitatively. The principle of XPS is generally described below.

XPS is a spectroscopy that measures the energy of photoelectrons emitted from a sample by X-ray irradiation. Photoelectrons collide readily with molecules in the atmosphere and are then scattered. Thus, an apparatus is required to be evacuated. Furthermore, photoelectrons emitted from deep positions in a solid sample are scattered in the sample and cannot escape from the surface of the sample. Thus, XPS is used to measure only photoelectrons from the surface of the sample and is thus effective as a surface analysis method. A region extending from the surface to about several nanometers in depth of the sample can be analyzed by XPS.

The kinetic energy E of photoelectrons observed is calculated by subtracting energy $\phi$ required for the transfer of electrons in crystals to the outside of the surface of the sample from hv - $E_K$, i.e., expressed as

$$E = h\nu - E_K - \phi \qquad (7)$$

where h represents Planck's constant, v represents a frequency, and $E_K$ represents electron binding energy. Expression (7) described above shows that the value of E varies depending on the energy of X-rays as an excitation source. Characteristic X-rays emitted from an X-ray tube with a target composed of aluminum or magnesium are commonly used as excitation X-rays. A method for measuring electron energy is not particularly limited. A typical method is an electrostatic-field method including guiding electrons into an electrostatic field and detecting only electrons in which the same trajectories are traced.

The electron binding energy $E_K$ can be measured by XPS. Binding energies are fundamentally element specific; hence, it is possible to identify the type of element. Furthermore, it is possible to quantify elements on the basis of the intensity of a photoelectron spectrum.

Meanwhile, incident X-rays travel from the surface to the inside of the sample. Mean free paths of excited photoelectrons are as small as 0.1 nm to several nanometers. Thus, photoelectrons are emitted from only the vicinity of the surface of the sample, which makes it possible to analyze the vicinity of the surface of the sample. In the case where several layers are arranged in the vicinity of the surface of the sample, however, trace amounts of elements in compositions of the layers are not accurately detected, in some cases. This is because relative amounts of elements in an average composition of a region extending from the surface to several tens of angstroms in depth are observed by XPS. In the case of observing the compositions of several layers arranged in the vicinity of the surface, the angular dependence of the escape depth of photoelectrons can be used. That is, while photoelectrons are isotropically emitted from the surface of the sample, the escape depth of photoelectrons from a solid surface varies depending on a photoelectron take-off angle. In the case of utilizing the phenomenon, a change in photoelectron take-off angle from a direction perpendicular to the surface of the sample to an oblique direction reduces the escape depth, thus providing information in the vicinity of the surface of the sample.

Here, the term "photoelectron take-off angle" is used to indicate the angle between the sample surface and a detector. The photoelectron take-off angle is in the range of 0° to 90° on the basis of the measurement principle of XPS. Figs. 1A and 1B show conceptual drawings schematically showing a photoelectron take-off angle in XPS measurement.

Fig. 1A shows a state of a photoelectron take-off angle of 90°. As shown in Fig. 1A, the term "a photoelectron take-off angle of 90°" is used to indicate that the angle $\theta$ between a surface 10a of a sample 10 and a detector 20 is 90°. As shown in Fig. 1A, in this case, the escape depth of photoelectrons is maximized, so that information from the surface 10a to a depth D can be detected.

Fig. 1B shows a state of a photoelectron take-off angle of 30°. As shown in Fig. 1B, in order to set the photoelectron take-off angle to 30°, the position of the detector 20 is fixed, and then the sample 10 is tilted to the detector

20. In the case of a photoelectron take-off angle of 30°, the escape depth d of photoelectrons is expressed as d = Dsin30° = 0.5D. Thus, a photoelectron take-off angle of 30° results in a reduction in the escape depth of photoelectrons, so that information in the closer vicinity of the surface can be detected.

In the water-resistant aluminum pigment according to this embodiment, the detection rate of silicon among elements (carbon, oxygen, aluminum, and silicon) detected by XPS remains substantially constant or is increased as the photoelectron take-off angle is increased.

The term "remains substantially constant" is not limited to the case where a completely identical detection rate is obtained but includes the case where the difference between the maximum value and the minimum value of the detection rates of silicon measured every photoelectron take-off angle is within the range of 0.1%. The term "is increased" is used to indicate that in a graph with the vertical axis representing the detection rate of silicon and the horizontal axis representing the sine value of the photoelectron take-off angle, the detection rate of silicon tends to increase monotonically as the sine value of the photoelectron take-off angle increases.

As described above, a smaller photoelectron take-off angle results in information in the closer vicinity of the surface of water-resistant aluminum pigment. Thus, the fact that the detection rate of silicon by XPS remains substantially constant as the photoelectron take-off angle is increased (i.e., the escape depth does not depend on the photoelectron take-off angle) indicates that a film is formed by bonding a compound of general formula (1) and/or alkoxyalkylsilane to the surface of each of the aluminum pigment particles and that the composition of a region of the film is substantially unchanged, the region extending from the surface to several nanometers in depth of each water-resistant aluminum pigment particle.

The fact that the detection rate of silicon by XPS is increased as the photoelectron take-off angle is increased indicates that a film is formed by bonding a compound of general formula (1) and/or alkoxyalkylsilane to the surface of each of the aluminum pigment particles and that in the region extending from the very top surface to several nanometers in depth of each water-resistant aluminum pigment particle, the density of the compound of general formula (1) and/or the alkoxyalkylsilane at an inner portion of the film is higher than the density in the vicinity of the surface of the film.

According to the water-resistant aluminum pigment having such a structure, the film with a thickness of about several nanometers is formed by chemically bonding the compound of general formula (1) and/or alkoxyalkylsilane to the surface of each of the aluminum pigment particles, thereby imparting water resistance to the pigment without impairing the metallic luster.

The detection rate of silicon is preferably in the range of 0.01% to 1% at any photoelectron take-off angle. In the case where the detection rate of silicon is within the above range, it is speculated that a monomolecular film composed of the compound of general formula (1) and/or alkoxyalkylsilane chemically bonded to the surface of each of the aluminum pigment particles is formed. Furthermore, it is believed that the compound of general formula (1) and/or alkoxyalkylsilane is not physically adsorbed on the monomolecular film, which is preferred.

## 3. Aqueous Ink Composition

An aqueous ink composition according to an embodiment of the invention contains the water-resistant aluminum pigment dispersion described above or the water-resistant aluminum pigment described above. The water-resistant aluminum pigment dispersion is based on an aqueous solvent and thus can be readily used for the aqueous ink composition. In this specification, the term "aqueous ink composition" is used to indicate an ink composition containing a solvent having a water content of 70% by mass or more. Pure water or ultrapure water, such as deionized water, ultrafiltered water, reverse osmosis water, or distilled water is preferably used as water. In particular, water prepared by subjecting the water to sterilization treatment, such as ultraviolet irradiation or the addition of hydrogen peroxide, is preferred because the generation of mold and bacteria is inhibited over long periods of time.

The aqueous ink composition according to this embodiment preferably has an aluminum pigment content of 0.1% to 3.0% by mass, more preferably 0.25% to 2.5% by mass, and particularly preferably 0.5% to 2.0% by mass with respect to the total mass of the aqueous ink composition.

The aqueous ink composition according to this embodiment may further contain an additive, for example, a surfactant, a polyhydric alcohol, or a pH-adjusting agent, as needed.

Examples of the surfactant include acetylene glycol-based surfactants and polysiloxane-based surfactants. These surfactants have the effect of increasing wettability on a recording surface and improving the permeability of the ink. Examples of the acetylene glycol-based surfactants include 2,4,7,9-tetramethyl-5-decyne-4,7-diol, 3,6-dimethyl-4-octyne-3,6-diol, 3,5-dimethyl-1-hexyne-3-ol, and 2,4-dimethyl-5-hexyne-3-ol. Commercially available acetylene glycol-based surfactants may be used. Examples thereof include Olfin E1010, STG, and Y (manufactured by Nissin Chemical Industry Co., Ltd.); and Surfynol 104, 82, 465, 485, and TG (manufactured by Air Products and Chemicals Inc). Commercially available polysiloxane-based surfactants may be used. Examples thereof include BYK-347 and BYK-348 (BYK Japan KK). The aqueous ink composition according to this embodiment may further contain another surfactant, e.g., an anionic surfactant, a nonionic surfactant, or an amphoteric surfactant.

Examples of the polyhydric alcohol include ethylene glycol, diethylene glycol, triethylene glycol, polyethylene glycol, polypropylene glycol, propylene glycol, butylene glycol, 1,2,6-hexanetriol, thioglycol, hexylene glycol, glycerol, trimethylolethane, trimethylolpropane. These polyhydric alcohols have the effect of preventing drying of the aqueous ink composition and clogging of an ink-jet recording head when the aqueous ink composition according to this embodiment is used in an ink-jet recording apparatus.

Examples of the pH-adjusting agent include, but are not particularly limited to, potassium dihydrogen phosphate, disodium hydrogen phosphate, sodium hydroxide, lithium hydroxide, potassium hydroxide, ammonia, diethanolamine, triethanolamine, triisopropanolamine, potassium carbonate, sodium carbonate, and sodium hydrogen carbonate.

Examples of applications of the aqueous ink composition according to this embodiment include, but are not particularly limited to, writing utensils, stamps, recorders, pen plotters, and ink-jet recording apparatus.

For example, in the case of ink-jet applications, the aqueous ink composition preferably has a viscosity of 2 to 10 mPa·s and more preferably 3 to 5 mPa·s at 20°C. At a viscosity of the aqueous ink composition within the above range at 20°C, an appropriate amount of the aqueous ink composition is ejected from a nozzle to achieve a further inhibition of the trajectory directionality problem and the scattering of the aqueous ink composition. Thus, the aqueous ink composition is suitably used in an ink-jet recording apparatus.

## 4. EXAMPLES

### 4.1. Example 1 to 3

#### 4.1.1. Preparation of Aluminum Pigment Dispersion

A resin-layer coating solution of 3.0% by mass of cellulose acetate butyrate (butylation rate: 35% to 39%, manufactured by Kanto Chemical Co., Inc.) and 97% by mass of diethylene glycol diethyl ether (manufactured by Nippon Nyukazai Co., Ltd.) was uniformly applied on a 100-μm-thick PET film by bar coating and then dried at 60°C for 10 minutes, forming a thin resin layer on the PET film.

An aluminum layer having an average thickness of 20 nm was formed on the resin layer with a vacuum evaporator (Model VE-1010, manufactured by Vacuum Device Inc).

A laminate formed by the method described above was simultaneously subjected to detachment, pulverization, and dispersion in diethylene glycol diethyl ether with an ultrasonic disperser (VS-150, manufactured by As One Corporation). The ultrasound treatment was performed for 12 hours in total, thereby preparing an aluminum pigment dispersion.

The resulting aluminum pigment dispersion was filtered through a stainless-steel mesh filter with 5-μm openings to remove coarse particles. The resulting filtrate was charged into a round-bottom flask. Diethylene glycol diethyl ether was removed by evaporation with a rotary evaporator, concentrating the aluminum pigment dispersion. The concentration of the aluminum pigment dispersion was then adjusted, thereby preparing an aluminum pigment dispersion having an aluminum pigment content of 5% by mass (hereinafter, also referred to as a "raw dispersion").

#### 4.1.2. Organic Group Introduction Step

First, 1 equivalent of water was added to a mixture of 1.25 equivalents of 3-methacryloxypropyltrimethoxysilane (trade name: KBM-503, manufactured by Shin-Etsu Chemical Co., Ltd.) and 1.25 equivalents of trimethoxymethylsilane (manufactured by Tokyo Chemical Industry Co., Ltd). The resulting mixture was stirred at 40°C for 1 to 2 hours, preparing a treatment agent.

Next, 100 g of the raw dispersion was charged into a beaker. The whole quantity of the treatment agent was added thereto. The resulting mixture was stirred at room temperature for 3 days to perform a hydrolytic reaction, thereby preparing a water-resistant aluminum pigment dispersion having silicon-containing films arranged on surfaces of aluminum pigment particles.

#### 4.1.3. Rinse Step

The resulting water-resistant aluminum pigment dispersion was centrifuged (at 12,000 rpm for 60 minutes) to remove the solvent in an amount corresponding to 70% by mass. Then diethylene glycol diethyl ether was added thereto in the same amount as thatof the removed solvent. The resulting mixture was sufficiently stirred. The mixture was centrifuged (at 12,000 rpm for 60 minutes) to remove the solvent in an amount corresponding to 70% by mass. This operation was repeated twice to rinse the water-resistant aluminum pigment.

4.1.4. Dispersion Step

An aqueous solution of 5% by mass PRISURF M-208B (hereinafter, also referred to as an "aqueous surfactant solution") was separately prepared. The aqueous solution of PRISURF M-208B was added in the same amount as that of the removed solvent. The resulting mixture was stirred for one day at room temperature, yielding a target water-resistant aluminum pigment dispersion.

Three batches (Examples 1 to 3) of water-resistant aluminum pigment dispersions were prepared through the steps described above.

4.1.5. Surface Analysis by XPS Measurement

The resulting water-resistant aluminum pigment was dropped on a membrane filter composed of polytetrafluoroethylene and dried to form a sample for XPS measurement. The sample for XPS measurement was fixed on a sample holder of an X-ray photoelectron spectrometer described below. The relative abundance of C, O, Si, Al, and P of the surfaces of the water-resistant aluminum pigment particles was measured under measurement conditions described below.

Measurement Conditions 1

- X-ray photoelectron spectrometer: ESCA 5800 (manufactured by ULVAC-PHI, Inc)
- X-ray source: Mg-K$\alpha$ X-ray
- Photoelectron take-off angle: 30°, 45°, and 70°

Tables 1 and 2 show the measurement results of the batches (Examples 1 to 3) by XPS under the measurement conditions described above.

Table 1

| | Photoelectron detection angle | C (%) | O (%) | Al (%) | Si (%) | P (%) |
|---|---|---|---|---|---|---|
| Example 1 | 30° | 52.1 | 26.8 | 17.3 | 0.04 | 3.7 |
| | 45° | 48.8 | 28.6 | 18.1 | 0.3 | 4.1 |
| | 70° | 38.2 | 31.6 | 23.6 | 0.8 | 5.9 |
| Example 2 | 30° | 53.0 | 27.3 | 16.0 | 0.1 | 3.6 |
| | 45° | 46.0 | 30.1 | 19.3 | 0.4 | 4.2 |
| | 70° | 38.0 | 32.5 | 24.1 | 0.8 | 4.6 |
| Example 3 | 30° | 50.0 | 28.8 | 17.2 | 0.2 | 3.8 |
| | 45° | 46.6 | 29.0 | 19.9 | 0.8 | 3.8 |
| | 70° | 35.0 | 32.9 | 25.6 | 0.8 | 5.6 |

Table 2

| | Photoelectron detection angle | Al (%) | Al-O (%) |
|---|---|---|---|
| Example 1 | 30° | 21 | 79 |
| | 45° | 22 | 78 |
| | 70° | 32 | 68 |
| Example 2 | 30° | 22 | 78 |
| | 45° | 23 | 77 |
| | 70° | 34 | 66 |

(continued)

| | Photoelectron detection angle | Al (%) | Al-O (%) |
|---|---|---|---|
| Example 3 | 30° | 24 | 76 |
| | 45° | 26 | 74 |
| | 70° | 34 | 66 |

Furthermore, the water-resistant aluminum pigment prepared in Example 1 was subjected to XPS measurement in the same way as above, except that the measurement conditions were changed as described below.

Measurement Conditions 2

X-ray photoelectron spectrometer: ESCA 1000 (manufactured by ULVAC-PHI, Inc)
X-ray source: Monochromatic Al-Kα X-ray
Photoelectron take-off angle: 15°

Measurement Conditions 3

X-ray photoelectron spectrometer: ESCA 5800 (manufactured by ULVAC-PHI, Inc)
X-ray source: Mg-Kα X-ray
Photoelectron take-off angle: 30°

Table 3 shows the measurement results under the measurement conditions 2. Table 4 shows the measurement results under the measurement conditions 3.

Table 3

| | Element concentration (atom%) | | | | |
|---|---|---|---|---|---|
| | C | O | Al | Si | P |
| Measurement condition 2 | 53.0 | 27.5 | 16.3 | 0.5 | 2.8 |

Table 4

| | Element concentration (atom%) | | | | |
|---|---|---|---|---|---|
| | C | O | Al | Si | P |
| Measurement condition 3 | 50.7 | 27.4 | 17.8 | 0.2 | 4.0 |

Note that Al (atom%) shown in Tables 3 and 4 includes elemental Al and Al with an Al-O bond. The peak of elemental Al is observed at 74.10 eV. The peak of Al with an Al-O bond is observed at 76.70 eV. Thus, proportions of elemental Al and Al with an Al-O bond can be determined by separating these peaks. Under both measurement conditions 2 and 3, the proportion of elemental Al was determined to be 12%, and the proportion of Al with an Al-O bond was determined to be 82%.

4.1.6. Analytical Result by XPS Measurement

As shown in Table 1, the relative abundance of silicon in Example 1 was 0.04% at a photoelectron take-off angle of 30°, 0.3% at 45°, and 0.8% at 70°. The relative abundance of silicon in Example 2 was 0.1% at a photoelectron take-off angle of 30°, 0.4% at 45°, and 0.8% at 70°. The relative abundance of silicon in Example 3 was 0.2% at a photoelectron take-off angle of 30°, 0.8% at 45°, and 0.8% at 70°. The results demonstrated that in the water-resistant aluminum pigments according to Examples 1 to 3, the detection rate of silicon by XPS tended to be increased as the photoelectron take-off angle was increased. This showed that a film was formed by chemically bonding 3-methacryloxypropyltrimethoxysilane and trimethoxymethylsilane to the surface of each of the aluminum pigment particles and that in a region extending from the very top surface of each water-resistant aluminum pigment particle to several nanometers in the thickness direction, the density of 3-methacryloxypropyltrimethoxysilane and trimethoxymethylsilane present at inner portion of the film was higher than that in the vicinity of the surface of the film.

The results shown in Tables 3 and 4 also suggested that 3-methacryloxypropyltrimethoxysilane and trimethoxymethylsilane were bonded to the surfaces of the aluminum pigment particles because the presence of Si was observed in the vicinity of the surfaces of the water-resistant aluminum pigment particles contained in the dispersion in Example 1. Furthermore, the presence of P was also observed. This suggested that a monoethanolamine salt of polyoxyethylene lauryl ether phosphate was present on the surfaces.

4.2. Examples 4 to 10 and Comparative Example 1

Water-resistant aluminum pigment dispersions according to Examples 4 to 10 and Comparative Example 1 were prepared as in Example 1, except that an aqueous solution containing 5% by mass of the surfactant shown in Table 5 was used in place of the aqueous surfactant solution in Example 1.

4.3. Examples 11 to 14

Water-resistant aluminum pigment dispersions according to Examples 11 to 14 were prepared as in Example 1, except that an aqueous solution of PRISURF M-208B with a concentration shown in Table 6 was used in place of the aqueous solution of "5% by mass" PRISURF M-208B in Example 1.

4.4. Comparative Example 2

The steps after Section "4.1.2. Organic Group Introduction Step" in Example 1 were changed as described below.

Into a beaker, 100 g of the raw dispersion was charged. Then 1.2 equivalent of γ-aminopropyltrimethoxysilane (trade name, A-1100, manufactured by Nippon Unicar Company Limited) was added thereto. The resulting mixture was stirred for three days at room temperature to perform a hydrolytic reaction, forming a film on the surface of each of the aluminum pigment particles. In this way, the water-resistant aluminum pigment dispersion according to Comparative Example 2 was prepared.

4.5. Comparative Example 3

The steps after Section "4.1.2. Organic Group Introduction Step" in Example 1 were changed as described below.

Into a beaker, 100 g of the raw dispersion was charged. Then 1.2 equivalent of γ-glycidoxypropyltrimethoxysilane (trade name, A-187, manufactured by Nippon Unicar Company Limited) was added thereto. The resulting mixture was stirred for three days at room temperature to perform a hydrolytic reaction, forming a film on the surface of each of the aluminum pigment particles.

The aluminum pigment dispersion that had been subjected to the hydrolysis reaction was taken out and transferred into a round-bottom flask. Then 1% by mass of a cationic polymerization initiator (trade name, San-Aid SI-80L, manufactured by Sanshin Chemical Industry Co., Ltd.) was added thereto. The mixture was subjected to polymerization reaction at 100°C for 5 hours under stirring. This densified the films formed on the surfaces of the aluminum pigment particles. In this way, the water-resistant aluminum pigment dispersion according to Comparative Example 3 was prepared.

4.6. Comparative Example 4

The steps after Section "4.1.2. Organic Group Introduction Step" in Example 1 were changed as described below.

Into a beaker, 100 g of the raw dispersion was charged. Then 1.2 equivalent of γ-aminopropyltrimethoxysilane (trade name, A-1100, manufactured by Nippon Unicar Company Limited) was added thereto. The resulting mixture was stirred for three days at room temperature to perform a hydrolytic reaction, thereby preparing an aluminum pigment dispersion I containing the aluminum pigment particles having the surfaces on which films were formed.

Meanwhile, 100 g of the raw dispersion was charged into a beaker. Then 1.2 equivalent of γ-glycidoxypropyltrimethoxysilane (trade name, A-187, manufactured by Nippon Unicar Company Limited) was added thereto. The resulting mixture was stirred for three days at room temperature to perform a hydrolytic reaction, thereby preparing an aluminum pigment dispersion II containing the aluminum pigment particles having the surfaces on which films were formed.

Next, the resulting aluminum pigment dispersions I and II were reacted at room temperature for one day under

stirring. This densified the films on the surfaces of the aluminum pigment particles, thereby preparing the water-resistant aluminum pigment dispersion according to Comparative Example 4.

4.7. Comparative Example 5

The steps after Section "4.1.2. Organic Group Introduction Step" in Example 1 were changed as described below.

Into a beaker, 100 g of the raw dispersion was charged. Then 1.2 equivalent of trimethoxymethylsilane (manufactured by Tokyo Chemical Industry Co., Ltd) was added thereto. The resulting mixture was stirred for one day at room temperature. In this way, the water-resistant aluminum pigment dispersion, in which hydroxy groups present on the surfaces of the aluminum pigment particles had been subjected to capping treatment according to Comparative Example 5 was prepared.

4.8. Comparative Example 6

The raw dispersion prepared in Section "4.1.1. Preparation of Aluminum Pigment Dispersion" was used as an aluminum pigment dispersion according to Comparative Example 6.

Note that abbreviated names of surfactants shown in Table 5 or 6 represent trade names (compounds) described below.

"M-208B" (trade name, PRISURF M-208B, a monoethanolamine salt of polyoxyethylene lauryl ether phosphate (HLB value = 6 to 8), manufactured by Dai-Ichi Kogyo Seiyaku Co., Ltd). "A-208B" (trade name, PRISURF A-208B, polyoxyethylene lauryl ether phosphate (HLB value = 6), manufactured by Dai-Ichi Kogyo Seiyaku Co., Ltd).

"A-219B" (trade name, PRISURF A-219B, polyoxyethylene lauryl ether phosphate (HLB value = 16), manufactured by Dai-Ichi Kogyo Seiyaku Co., Ltd).

"A-210D" (trade name, PRISURF A-210D, polyoxyethylene decyl ether phosphate (HLB value = 6 to 8), manufactured by Dai-Ichi Kogyo Seiyaku Co., Ltd).

"AL" (trade name, PRISURF AL, polyoxyethylene styrenated phenyl ether phosphate, manufactured by Dai-Ichi Kogyo Seiyaku Co., Ltd).

"M-208F" (trade name, PRISURF M-208F, a monoethanolamine salt of polyoxyethylene octyl ether phosphate (HLB value = 9 to 12), manufactured by Dai-Ichi Kogyo Seiyaku Co., Ltd). "CS" (trade name, ADEKA COL CS-1361E, a sodium salt of polyoxyethylene phenyl ether phosphate (HLB value = 8 to 15), manufactured by Adeka Corporation).

"RD" (trade name, PHOSPHANOL RD-720, a sodium salt of polyoxyethylene octadecyl ether phosphate (HLB value = 14.4), manufactured by Toho Chemical Industry Co., Ltd)

"K-30L" (trade name, PITZCOL K-30L, polyvinylpyrrolidone (HLB value = 8 to 12), manufactured by Dai-Ichi Kogyo Seiyaku Co., Ltd).

4.9. Evaluation Test on Water-Resistant Aluminum Pigment Dispersion

4.9.1. Water Resistance Evaluation Test

Into a sample bottle, 2 mL of water was charged. One drop of any one of the resulting water-resistant aluminum pigment dispersions (hereinafter, simply referred to as "dispersions") was added thereto. The mixture was allowed to stand at a constant temperature of 25°C. A time-dependent change was visually observed to evaluate the water resistance of the dispersion. Evaluation criteria for the water resistance of the dispersion were described below.

A: Even six months later, no change was observed, and the silvery plate shape was maintained.
B: One month later, the generation of hydrogen gas was observed.
C: 10 days later, the generation of hydrogen gas was observed.
D: One day later, the generation of hydrogen gas was observed, and the particles whitened or blackened.

4.9.2. Water Dispersibility Evaluation Test

Into a sample bottle, 2 mL of water was charged. One drop of any one of the resulting water-resistant aluminum pigment dispersions was added thereto. The mixture was allowed to stand at a constant temperature of 25°C. A time-dependent change was visually observed to evaluate the water dispersibility of the dispersion. When the evaluation was made, the sample bottle was lightly shaken by hand. Evaluation criteria for the water dispersibility of the dispersion were described below.

A: Even six months later, no change was observed, and the silvery plate shape was maintained.
B: One month later, aggregation was observed.
C: 10 days later, aggregation was observed.
D: Immediately after the addition, aggregation was observed.

4.9.3. Metallic Luster Evaluation Test

Any one of the dispersions prepared in the steps described above was applied by dropping on photographic paper ("PM Photographic Paper (Glossy), Model KA450PSK", manufactured by Seiko Epson Corporation) and dried at room temperature. The resulting sample was observed visually and with a scanning electron microscope to evaluate the metallic luster of the printed aluminum pigment. Evaluation criteria for the metallic luster of the aluminum pigment were described below.

A: The pigment had an excellent metallic luster and specular gloss.
B: The pigment had an excellent metallic luster but a slightly matte surface.
C: The pigment had a matte surface.
D: The pigment blackened.

4.9.4. Measurement of Average Zeta Potential

The zeta potential of each of the dispersions according to Examples 1, 11, and 12 was measured with a zeta potential meter (Model: Zetasizer Nano-ZS, manufactured by Sysmex Corporation). Note that the measurement of the zeta potential was continuously repeated 5 times, and the average value of the resulting values of the zeta potential was defined as the average zeta potential. Table 6 also shows the results.

4.9.5. Evaluation Result

Table 5 shows the results of the evaluation tests of the water resistance, water dispersibility, and metallic luster of the dispersions according to Examples 1 to 10 and Comparative Example 1. Table 6 shows the results of the evaluation tests of the water resistance, water dispersibility, and metallic luster and the measurement results of the average zeta potential of the dispersions according to Examples 11 to 14. Table 7 shows the results of the evaluation tests of the water resistance, water dispersibility, and metallic luster of the dispersions according to Comparative Examples 2 to 6.

Table 5

| | | Example 1 | Example 2 | Example 3 | Example 4 | Example 5 | Example 6 |
|---|---|---|---|---|---|---|---|
| Surfactant | | M-208B | M-208B | M-208B | M-208B | M-219B | M-210D |
| Evaluation result | Water resistance evaluation test | A | A | A | B | C | C |
| | Water dispersibility evaluation test | A | A | A | B | C | C |
| | Metallic luster evaluation test | A | A | A | A | B | B |

| | | Example 7 | Example 8 | Example 9 | Example 10 | Comparative Example 1 |
|---|---|---|---|---|---|---|
| Surfactant | | AL | M-208F | CS | RD | K-30L |
| Evaluation result | Water resistance evaluation test | C | C | C | B | D |
| | Water dispersibility evaluation test | C | C | B | B | D |
| | Metallic luster evaluation test | B | B | B | B | D |

Table 6

| | | Example 1 | Example 11 | Example 12 | Example 13 | Example 14 |
|---|---|---|---|---|---|---|
| Surfactant | | M-208B | M-208B | M-208B | M-208B | M-208B |
| Surfactant concentration (%) | | 5 | 1 | 3 | 7 | 10 |
| Evaluation result | Water resistance evaluation test | A | C | B | A | A |
| | Water dispersibility evaluation test | A | C | B | A | A |
| | Metallic luster evaluation test | A | C | B | B | B |
| | Average zeta potential (mV) | -60 | -23 | -50 | - | - |

Table 7

| | | Comparative Example 2 | Comparative Example 3 | Comparative Example 4 | Comparative Example 5 | Comparative Example 6 |
|---|---|---|---|---|---|---|
| Evaluation result | Water resistance evaluation test | D | D | D | D | C |
| | Water dispersibility evaluation test | D | D | D | D | D |
| | Metallic luster evaluation test | D | D | D | D | D |

Table 5 demonstrated that each of the dispersions according to Examples 1 to 3 had significantly excellent water resistance, water dispersibility, and an excellent metallic luster in a printed state. SEM observation of the samples that had been subjected to the metallic luster evaluation test showed that aluminum thin pieces were regularly stacked.

The dispersion according to Example 4 had significantly excellent water resistance, water dispersibility, and an excellent metallic luster in a printed state. The dispersion according to Example 4 was slightly inferior in water resistance and water dispersibility to those of the dispersions according to Examples 1 to 3 but provided sufficient performance. SEM observation of the sample that had been subjected to the metallic luster evaluation test showed that aluminum thin pieces were regularly stacked.

Each of the dispersions according to Examples 5 to 10 was inferior in all evaluation items to those of the dispersions according to Examples 1 to 3 but was within an allowable range as a good product. Among these, the dispersions according to Examples 9 and 10 had the same water dispersibility as that of the dispersion according to Example 4. The dispersion according to Example 10 had the same water resistance as that of the dispersion according to Example 4. The printed article was slightly matte and was not glossy. SEM observation of the samples that had been subjected to the metallic luster evaluation test showed that in any dispersion, edges of the aluminum pieces of all samples were dissolved because of erosion by water. Thus, it is speculated that an increase in the thickness of the stacked aluminum pieces diminished the metallic luster.

With respect to the dispersion according to Comparative Example 1, in the water resistance test, a gas was generated after one day, and the aluminum pigment blackened. In the water dispersibility test, aggregation was observed immediately after the addition. The printed article blackened. A metallic luster was not provided at all.

From the foregoing results, each of the dispersions according to Examples 1 to 10 was within an allowable range as a good product in all evaluation items of the water resistance, water dispersibility, and metallic luster. Note that different performances of the dispersions were observed in response to the type of polyoxyethylene ether phosphate or its salt used.

From the results shown in Table 6, The dispersion according to Example 11 was slightly inferior in water resistance and water dispersibility to those of the dispersion according to Example 1 but was within an allowable range as a good product. This is probably because a small amount of the surfactant added caused lack of the amount of PRISURF

M-208B attached to the surfaces of the aluminum pigment particles, thus promoting aggregation. This was corroborated by an average zeta potential of -23 mV. Furthermore, the printed article was slightly matte and was not glossy. SEM observation of the sample that had been subjected to the metallic luster evaluation test showed that in any dispersion, edges of the aluminum pieces were dissolved because of erosion by water. Thus, it is speculated that an increase in the thickness of the stacked aluminum pieces diminished the metallic luster.

The dispersion according to Example 12 was superior in all evaluation items to the dispersion according to Example 11 but inferior in all evaluation items to the dispersion according to Example 1. When the amount of PRISURF M-208B added was 3% by mass, the average zeta potential was -50 mV. When the amount of PRISURF M-208B added was 5% by mass, the average zeta potential was -60 mV. Thus, there was a tendency to increase the absolute value of the average zeta potential as the amount of PRISURF M-208B added was increased.

The dispersions according to Examples 13 and 14 had water resistance and water dispersibility comparable to those of the dispersion according to Example 1. Each of the printed articles had a metallic luster but was slightly matte.

From the foregoing results, each of the dispersions according to Examples 1 and 11 to 14 was within an allowable range as a good product in all evaluation items of the water resistance, water dispersibility, and metallic luster. Note that different performances of the dispersions were observed in response to the amount of the surfactant (PRISURF M-208B) used.

From the results shown in Table 7, the dispersion according to Comparative Example 2, which was prepared by reacting an amino group-containing alkoxysilane with hydroxy groups present on the surfaces of the aluminum pigment particles, did not provide satisfactory water resistance, water dispersibility, or metallic luster. The amine-based compound was basic. It is thus speculated that the aluminum pigment was readily whitened. SEM observation of the sample that had been subjected to the metallic luster evaluation test showed that the thin aluminum pieces were partially aggregated.

The dispersion according to Comparative Example 3, which was prepared by reacting a glycidyl group-containing alkoxysilane with hydroxy groups present on the surfaces of the aluminum pigment particles and then performing self-cross linking, did not provide satisfactory water resistance, water dispersibility, or metallic luster.

The dispersion according to Comparative Example 4, which was prepared by reacting a glycidyl group-containing alkoxysilane and an amino group-containing alkoxysilane with hydroxy groups present on the surfaces of the aluminum pigment particles, did not provide satisfactory water resistance, water dispersibility, or metallic luster.

The dispersion according to Comparative Example 5, which was prepared by covering hydroxy groups present on the surfaces of the aluminum pigment particles with only trimethoxymethylsilane, did not provide satisfactory water resistance, water dispersibility, or metallic luster.

The dispersion according to Comparative Example 6, which was the raw dispersion, did not provide satisfactory water resistance, water dispersibility, or metallic luster without any processing.

4.10. Evaluation of Aqueous Ink Composition

4.10.1. Preparation of Aqueous Ink Composition

A dispersion, glycerol, trimethylolpropane, 1,2-hexanediol, Olfin E1010 (acetylene glycol-based surfactant, manufactured by Nissin Chemical Industry Co., Ltd.), and triethanolamine were mixed in such a manner that a composition described below was achieved. Furthermore, 100 parts by mass of deionized water was added thereto. The mixture was then stirred.

Composition of Aqueous Ink Composition

Aluminum pigment (solid content): 1 part by mass
Glycerol: 10 parts by mass
Trimethylolpropane: 5 parts by mass
1,2-Hexanediol: 1 part by mass
Olfin E1010: 1 part by mass
triethanolamine: 1 part by mass
Deionized water: balance
Total: 100 parts by mass

Note that any one of the dispersions according to Example 1 and Comparative Examples 2 and 6 was used as the dispersion.

4.10.2. Preparation of Evaluation Sample

The foregoing aqueous ink composition was charged into a specialized cartridge of an ink-jet printer (Model PX-G930, manufactured by Seiko Epson Corporation) to form an ink cartridge containing the aqueous ink composition. The resulting ink cartridge was mounted on a black-ink-cartridge holder of the ink-jet printer PX-G930. Commercially available ink cartridges were mounted on the other ink-cartridge holders. Note that the commercially available ink cartridges mounted on the holders other than the black-ink-cartridge holder were used as dummy cartridges and were not used for the evaluation in this example; hence, the commercially available ink cartridges did not participate in the advantages of the invention.

Next, the aqueous ink composition mounted on the black-ink-cartridge holder was ejected on photo paper (Glossy) (manufactured by Seiko Epson Corporation) with the printer to provide a recorded article on which a solid pattern image was formed. With respect to the printing conditions, the weight of ink ejected was set to 20 ng per dot, the vertical resolution was set to 720 dpi, and the horizontal resolution was set to 720 dpi.

4.10.3. Evaluation Method of Image

The degree of luster at 60° of the resulting image was measured with a gloss meter (Model MULTI Gloss 268, manufactured by Konica Minolta Holdings, Inc). The evaluation criteria of the resulting image were described below. Table 8 shows the results of a luster evaluation test.

A: A degree of luster of 300 or more (clear metallic luster)
B: A degree of luster of 250 or more and less than 300 (matte metallic luster)
C: A degree of luster of 200 or more and less than 250 (no metallic luster)
D: Unmeasurable (because of the failure of the ejection of the aqueous ink composition)

Table 8

| | | | | |
|---|---|---|---|---|
| Aqueous ink composition | Dispersion | Dispersion of Example 1 | Dispersion of Comparative Example 2 | Dispersion of Comparative Example 6 |
| | Silane coupling agent | 3-Methacryloxypropyl trimethoxysilane | γ-Aminopropyltrimethoxysilane | Untreated |
| Evaluation result | Degree of luster | 360 | Unmeasurable due to failure of ejection | Unmeasurable due to failure of ejection |
| | Luster evaluation | A | D | D |

4.10.4. Evaluation Result

As shown in Table 8, in the case of using the aqueous ink composition prepared from the dispersion according to Example 1, the degree of luster was 360, it was possible to form the image with a clear metallic luster by printing.

Meanwhile, in the case where the aqueous ink compositions prepared from the dispersions according to Comparative Examples 2 and 3 were used, the ink compositions were not ejected from a head the ink-jet recording apparatus, so that no image was formed. This may be because the aluminum pigment particles in each of the aqueous ink compositions were aggregated to increase the particle size, causing clogging of the head.

The invention is not limited to the foregoing embodiments. Various changes can be made. For example, the invention includes configurations substantially the same as those described in the embodiments (for example, a configuration with the same function, method, and result, or a configuration with the same object and effect). The invention also includes configurations in which portions not essential in the configurations described in the embodiments are replaced with others. The invention includes configurations that achieve the same functions and effects or achieve the same objects of those of the compositions described in the embodiments. Furthermore, the invention includes configurations in which known techniques are added to the configurations described in the embodiments.

## Claims

**1.** A water-resistant aluminum pigment comprising:

a compound of general formula (1) described below, which is chemically bonded to particle surfaces of the aluminum pigment; and
at least one selected from polyoxyethylene alkyl ether phosphate and salts thereof,

$$(R^1O)_p-Si(R^2)_q-(CH_2)_r-OR^3 \quad \cdots \quad (1)$$

(wherein p represents an integer of 1 to 3, q represents an integer that satisfies the equation p + q = 3, r represents an integer of 2 to 10, $R^1$ and $R^2$ each independently represent an alkyl group having 1 to 4 carbon atoms, and $R^3$ represents an acrylic group, an acryloyl group, or a methacryloyl group).

**2.** The water-resistant aluminum pigment according to Claim 1, wherein alkoxyalkylsilane is also chemically bonded to the particle surfaces of the aluminum pigment.

**3.** The water-resistant aluminum pigment according to Claim 1 or 2, wherein the aluminum pigment particles are plate-like particles having an average thickness of 5 nm to 30 nm and a 50%-average particle diameter of 0.5 μm to 3 μm.

**4.** The water-resistant aluminum pigment according to any one of Claims 1 to 3, wherein in an elementary analysis by X-ray photoelectron spectroscopy, the detection rate of silicon remains substantially constant or is increased as a photoelectron take-off angle is increased.

**5.** The water-resistant aluminum pigment according to Claim 4, wherein the detection rate of silicon is in the range of 0.01% to 1%.

**6.** A water-resistant aluminum pigment dispersion comprising:

water-resistant aluminum pigment particles as defined in claim 1, where the particles are each coated with a film containing at least silicon, the particles being prepared by subjecting an aluminum pigment to surface treatment with a treatment agent containing a compound of general formula (1) described below; and
an aqueous solution containing at least one selected from polyoxyethylene alkyl ether phosphate and salts thereof, the particles being dispersed in the aqueous solution,

$$(R^1O)_p-Si(R^2)_q-(CH_2)_r-OR^3 \quad \cdots \quad (1)$$

(wherein p represents an integer of 1 to 3, q represents an integer that satisfies the equation p + q = 3, r represents an integer of 2 to 10, $R^1$ and $R^2$ each independently represent an alkyl group having 1 to 4 carbon atoms, and $R^3$ represents an acrylic group, an acryloyl group, or a methacryloyl group).

**7.** The water-resistant aluminum pigment dispersion according to Claim 6, wherein the treatment agent further contains alkoxyalkylsilane and water.

**8.** The water-resistant aluminum pigment dispersion according to Claim 6 or 7, wherein the proportion of the at least one selected from the polyoxyethylene alkyl ether phosphate and salts thereof is 0.3 to 7.0 times the proportion of the aluminum pigment.

**9.** The water-resistant aluminum pigment dispersion according to any one of Claims 6 to 8, wherein the aluminum pigment particles are plate-like particles having an average thickness of 5 nm to 30 nm and a 50%-average particle diameter of 0.5 μm to 3 μm.

**10.** The water-resistant aluminum pigment dispersion according to any one of Claims 6 to 9, wherein the film containing silicon has a thickness of 0.5 nm to 10 nm.

**11.** An aqueous ink composition comprising:
the water-resistant aluminum pigment dispersion according to Claim 6 or the water-resistant aluminum pigment

according to Claim 1.

**12.** A method for producing a water-resistant aluminum pigment dispersion, as defined in Claim 6, the method comprising:

(a) adding a treatment agent containing a compound of general formula (1) described below to an aluminum pigment dispersion containing aluminum pigment particles dispersed in an organic solvent and reacting a hydroxy group present on a surface of each of the aluminum pigment particles with the compound of general formula (1) described below to form a film on the surface of each aluminum pigment particle,
(b) removing at least a portion of the organic solvent, and
(c) adding an aqueous solution containing at least one selected from polyoxyethylene alkyl ether phosphate and salts thereof,

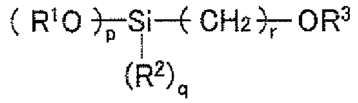 ··· (1)

(wherein p represents an integer of 1 to 3, q represents an integer that satisfies the equation p + q = 3, r represents an integer of 2 to 10, $R^1$ and $R^2$ each independently represent an alkyl group having 1 to 4 carbon atoms, and $R^3$ represents an acrylic group, an acryloyl group, or a methacryloyl group).

**13.** The method according to Claim 12, wherein the treatment agent further contains alkoxyalkylsilane and water.

**14.** The method according to Claim 12 or 13, wherein the aluminum pigment particles are plate-like particles having an average thickness of 5 nm to 30 nm and a 50%-average particle diameter of 0.5 μm to 3 μm.

**15.** The method according to any one of Claims 12 to 14, wherein the film has a thickness of 0.5 nm to 10 nm.

**16.** The method according to any one of Claims 12 to 15, wherein the organic solvent is diethylene glycol diethyl ether or triethylene glycol monobutyl ether.

**Patentansprüche**

**1.** Wasserbeständiges Aluminiumpigment, umfassend:

eine Verbindung der unten beschriebenen allgemeinen Formel (1), die chemisch an die Partikeloberfläche des Aluminiumpigments gebunden ist; und
mindestens einen Vertreter, ausgewählt aus Polyoxyethylenalkyletherphosphat und Salzen davon,

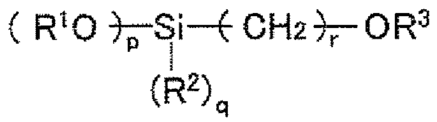 ··· (1)

(worin p für eine ganze Zahl von 1 bis 3 steht, q für eine ganze Zahl steht, die die Gleichung p + q = 3 erfüllt, r für eine ganze Zahl von 2 bis 10 steht, $R^1$ und $R^2$ jeweils unabhängig voneinander für eine Alkylgruppe mit 1 bis 4 Kohlenstoffatomen stehen, und $R^3$ für eine Acrylgruppe, eine Acryloylgruppe oder eine Methacryloylgruppe steht).

**2.** Wasserbeständiges Aluminiumpigment gemäß Anspruch 1, wobei auch ein Alkoxyalkylsilan chemisch an die Partikeloberfläche des Aluminiumpigments gebunden ist.

**3.** Wasserbeständiges Aluminiumpigment gemäß Anspruch 1 oder 2, wobei die Aluminiumpigmentpartikel platten-förmige Partikel mit einer durchschnittlichen Dicke von 5 nm bis 30 nm und einem 50%-Durchschnitt-Partikeldurchmesser von 0,5 μm bis 3 μm sind.

**4.** Wasserbeständiges Aluminiumpigment gemäß einem der Ansprüche 1 bis 3,
wobei die Detektionsrate von Silicium in einer Elementaranalyse mittels Röntgen-Photoelektronenspektroskopie im Wesentlichen konstant bleibt oder erhöht wird, wenn ein Photoelektronenabstrahlwinkel erhöht wird.

**5.** Wasserbeständiges Aluminiumpigment gemäß Anspruch 4, wobei die Detektionsrate von Silicium im Bereich von 0,01% bis 1% liegt.

**6.** Wasserbeständige Aluminiumpigmentdispersion, umfassend:

wasserbeständige Aluminiumpigmentpartikel, wie in Anspruch 1 definiert, wobei die Partikel jeweils mit einem Film beschichtet sind, der mindestens Silicium enthält, wobei die Partikel hergestellt werden, indem ein Aluminiumpigment einer Oberflächenbehandlung mit einem Behandlungsmittel, enthaltend eine Verbindung der unten beschriebenen allgemeinen Formel (1), unterzogen werden; und
eine wässrigen Lösung, enthaltend mindestens einen Vertreter, ausgewählt aus
Polyoxyethylenalkyletherphosphat und Salzen davon, wobei die Partikel in der wässrigen Lösung dispergiert sind,

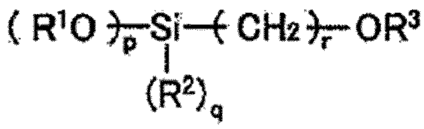
··· (1)

(worin p für eine ganze Zahl von 1 bis 3 steht, q für eine ganze Zahl steht, die die Gleichung p + q = 3 erfüllt, r für eine ganze Zahl von 2 bis 10 steht, $R^1$ und $R^2$ jeweils unabhängig voneinander für eine Alkylgruppe mit 1 bis 4 Kohlenstoffatomen stehen, und $R^3$ für eine Acrylgruppe, eine Acryloylgruppe oder eine Methacryloylgruppe steht).

**7.** Wasserbeständige Aluminiumpigmentdispersion gemäß Anspruch 6,
wobei das Behandlungsmittel zusätzlich Alkoxyalkylsilan und Wasser enthält.

**8.** Wasserbeständige Aluminiumpigmentdispersion gemäß Anspruch 6 oder 7,
wobei der Anteil des mindestens einen Vertreters, ausgewählt aus dem Polyoxyethylenalkyletherphosphat und Salzen davon, das 0,3 bis 7,0-fache des Anteils des Aluminiumpigments beträgt.

**9.** Wasserbeständige Aluminiumpigmentdispersion gemäß einem der Ansprüche 6 bis 8,
wobei die Aluminiumpigmentpartikel platten-förmige Partikel mit einer durchschnittlichen Dicke von 5 nm bis 30 nm und einem 50%-Durchschnitt-Partikeldurchmesser von 0,5 $\mu$m bis 3 $\mu$m sind.

**10.** Wasserbeständige Aluminiumpigmentdispersion gemäß einem der Ansprüche 6 bis 9,
wobei der Film, der Silicium enthält, eine Dicke von 0,5 nm bis 10 nm aufweist.

**11.** Wässrige Tintenzusammensetzung, umfassend:
die wasserbeständige Aluminiumpigmentdispersion gemäß Anspruch 6 oder das wasserbeständige Aluminiumpigment gemäß Anspruch 1.

**12.** Verfahren zur Herstellung einer wasserbeständigen Aluminiumpigmentdispersion, wie in Anspruch 6 definiert, wobei das Verfahren umfasst:

(A) das Hinzufügen von einem Behandlungsmittel, das eine Verbindung der unten beschriebenen allgemeinen Formel (1) enthält, zu einer Aluminiumpigmentdispersion, die in einem organischen Lösungsmittel dispergierte Aluminiumpigmentpartikel enthält, und das Umsetzen von einer Hydroxygruppe, die auf einer Oberfläche von jedem der Aluminiumpigmentpartikel vorhanden ist, mit der Verbindung der unten beschriebenen allgemeinen Formel (1), um einen Film auf der Oberfläche von jedem Aluminiumpigmentpartikel zu bilden,
(B) das Entfernen von mindestens einem Teil des organischen Lösungsmittels,
und
(C) das Hinzufügen einer wässrigen Lösung, die mindestens einen Vertreter, ausgewählt aus Polyoxyethylenalkyletherphosphat und Salzen davon, enthält,

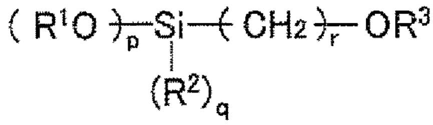 ··· (1)

(worin p für eine ganze Zahl von 1 bis 3 steht, q für eine ganze Zahl steht, die die Gleichung p + q = 3 erfüllt, r für eine ganze Zahl von 2 bis 10 steht, $R^1$ und $R^2$ jeweils unabhängig voneinander für eine Alkylgruppe mit 1 bis 4 Kohlenstoffatomen stehen, und $R^3$ für eine Acrylgruppe, eine Acryloylgruppe oder eine Methacryloylgruppe steht).

**13.** Verfahren gemäß Anspruch 12,
bei dem das Behandlungsmittel zusätzlich Alkoxyalkylsilan und Wasser enthält.

**14.** Verfahren gemäß Anspruch 12 oder 13,
bei dem die Aluminiumpigmentpartikel platten-förmige Partikel mit einer durchschnittlichen Dicke von 5 nm bis 30 nm und einem 50%-Durchschnitt-Partikeldurchmesser von 0,5 μm bis 3 μm sind.

**15.** Verfahren gemäß einem der Ansprüche 12 bis 14,
bei dem der Film eine Dicke von 0,5 nm bis 10 nm aufweist.

**16.** Verfahren gemäß einem der Ansprüche 12 bis 15,
bei dem das organische Lösungsmittel Diethylenglykoldiethylether oder Triethylenglykolmonobutylether ist.

## Revendications

**1.** Pigment d'aluminium résistant à l'eau comprenant :

un composé de formule générale (1) décrite ci-dessous, qui est chimiquement lié à des surfaces particulaires du pigment d'aluminium ; et
au moins un choisi parmi un alkylétherphosphate de *polyoxyéthylène* et des sels de celui-ci,

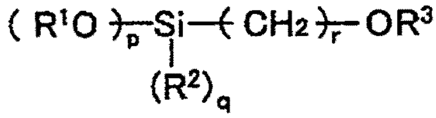 ··· (1)

(dans lequel p représente un nombre entier compris entre 1 et 3, q représente un nombre entier qui satisfait l'équation p + q = 3, r représente un nombre entier compris entre 2 et 10, $R^1$ et $R^2$ représentent chacun indépendamment un groupe alkyle possédant de 1 à 4 atomes de carbone, et $R^3$ représente un groupe acrylique, un groupe acryloyle ou un groupe méthacryloyle).

**2.** Pigment d'aluminium résistant à l'eau selon la revendication 1, dans lequel l'alkoxyalkylsilane est également chimiquement lié aux surfaces particulaires du pigment d'aluminium.

**3.** Pigment d'aluminium résistant à l'eau selon la revendication 1 ou 2, dans lequel les particules de pigment d'aluminium sont des particules analogues à une plaque présentant une épaisseur moyenne comprise entre 5 nm et 30 nm et un diamètre particulaire moyen-50 % compris entre 0,5 μm et 3 μm.

**4.** Pigment d'aluminium résistant à l'eau selon l'une des revendications 1 à 3, dans lequel, dans une analyse élémentaire par spectroscopie photoélectronique des rayons X, le taux de détection de silicium reste substantiellement constant ou est augmenté lorsque l'angle de départ photoélectronique est augmenté.

**5.** Pigment d'aluminium résistant à l'eau selon la revendication 4, dans lequel le taux de détection de silicium est dans une plage comprise entre 0,01 % et 1 %.

**6.** Dispersion de pigment d'aluminium résistante à l'eau comprenant :

des particules de pigment d'aluminium résistantes à l'eau telles que définies dans la revendication 1, dans laquelle les particules sont chacune recouvertes d'un film contenant au moins du silicium, les particules étant préparées en soumettant un pigment d'aluminium à un traitement de surface avec un agent de traitement contenant un composé de formule générale (1) décrite ci-dessous; et
une solution aqueuse contenant au moins un composé choisi parmi le phosphate d'alkyléther de polyoxyéthylène et ses sels, les particules étant
dispersées dans la solution aqueuse,

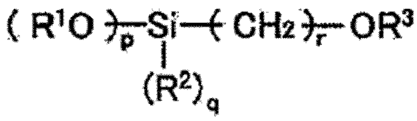

··· (1)

(dans laquelle p représente un nombre entier de 1 à 3, q représente un nombre entier qui satisfait l'équation $p + q = 3$, r représente un nombre entier de 2 à 10, $R^1$ et $R^2$ représentent chacun indépendamment un groupe alkyle ayant 1 à 4 atomes de carbone, et $R^3$ représente un groupe acrylique, un groupe acryloyle ou un groupe méthacryloyle).

**7.** Dispersion de pigment d'aluminium résistant à l'eau selon la revendication 6 dans laquelle l'agent de traitement contient en outre de l'alkoxyalkylsilane et de l'eau.

**8.** Dispersion de pigment d'aluminium résistant à l'eau selon la revendication 6 ou 7, dans laquelle la proportion du au moins un choisi parmi un alkylétherphosphate de *polyoxyéthylène* et des sels de celui-ci est comprise entre 0,3 et 7,0 fois la proportion du pigment d'aluminium.

**9.** Dispersion de pigment d'aluminium résistant à l'eau selon l'une des revendications 6 à 8, dans laquelle les particules de pigment d'aluminium sont des particules analogues à une plaque présentant une épaisseur moyenne comprise entre 5 nm et 30 nm et un diamètre particulaire moyen-50 % compris entre 0,5 μm et 3 μm.

**10.** Dispersion de pigment d'aluminium résistant à l'eau selon l'une des revendications 6 à 9, dans laquelle le film contenant du silicium présente une épaisseur comprise entre 0,5 nm et 10 nm.

**11.** Composition d'encre aqueuse comprenant :
la dispersion de pigment d'aluminium résistant à l'eau selon la revendication 6 ou le pigment d'aluminium résistant à l'eau selon la revendication 1.

**12.** Procédé de production d'une dispersion de pigment d'aluminium résistant à l'eau, telle que définie dans la revendication 6, le procédé comprenant :

(a) l'ajout d'un agent de traitement contenant un composé de formule générale (1) décrite ci-dessous à une dispersion de pigment d'aluminium contenant des particules de pigment d'aluminium dispersées dans un solvant organique et la réaction d'un groupe hydroxy présent sur une surface de chacune des particules de pigment d'aluminium avec le composé de formule générale (1) décrite ci-dessous pour former un film sur la surface de chaque particule de pigment d'aluminium,
(b) l'élimination d'au moins une partie du solvant organique, et
(c) l'ajout d'une solution aqueuse contenant au moins un choisi parmi un alkylétherphosphate de *polyoxyéthylène* et des sels de celui-ci,

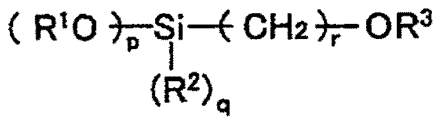

··· (1)

(dans laquelle p représente un nombre entier compris entre 1 et 3, q représente un nombre entier qui satisfait l'équation $p + q = 3$, r représente un nombre entier compris entre 2 et 10, $R^1$ et $R^2$ représentent chacun indépendamment un groupe alkyle possédant de 1 à 4 atomes de carbone, et $R^3$ représente un groupe acrylique, un groupe acryloyle ou un groupe méthacryloyle).

**13.** Procédé selon la revendication 12, dans lequel l'agent de traitement comprend en outre de l'alkoxyalkylsilane et de

l'eau.

**14.** Procédé selon la revendication 12 ou 13, dans lequel les particules de pigment d'aluminium sont des particules analogues à une plaque présentant une épaisseur moyenne comprise entre 5 nm et 30 nm et un diamètre particulaire moyen-50 % compris entre 0,5 $\mu$m et 3 $\mu$m.

**15.** Procédé selon l'une des revendications 12 à 14, dans lequel le film présente une épaisseur comprise entre 0,5 nm et 10 nm.

**16.** Procédé selon l'une des revendications 12 à 15, dans lequel le solvant organique est l'éther *diéthylique de diéthylène-glycol* ou l'éther mono-butylique de triéthylène-glycol.

FIG. 1A

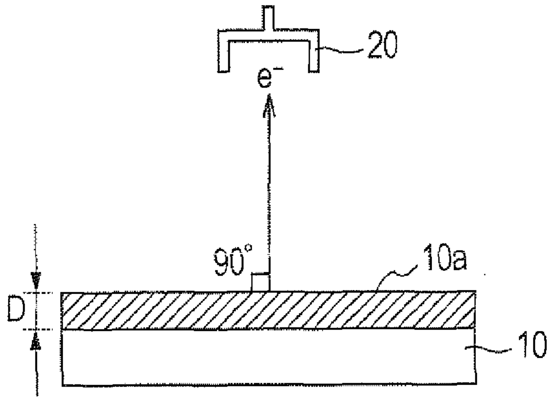


FIG. 1B

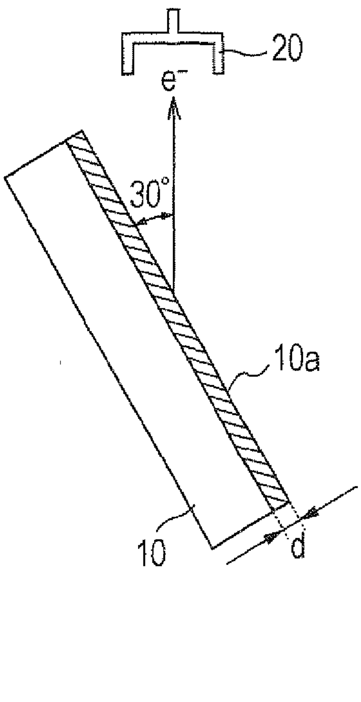

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008174712 A
- DE 102005037611 A1
- WO 2005063897 A2
- JP 2005068250 A
- JP 2005068251 A